# FASCICULE DE BREVET EUROPEEN

(11) **EP 4 370 424 B1**
(45) Date de publication et mention de la délivrance du brevet: **03.09.2025**
(21) Numéro de dépôt: 22755254.4
(22) Date de dépôt: 11.07.2022
(51) Int. Cl.: B64G 1/64

(54) **DISPOSITIF DE SEPARATION COMPRENANT UN ELEMENT D'AMORTISSEMENT**
TRENNVORRICHTUNG MIT DÄMPFUNGSELEMENT
SEPARATION DEVICE COMPRISING A DAMPING ELEMENT

(30) Priorité: 16.07.2021 FR 2107692
(43) Date de publication de la demande: 22.05.2024
(73) Titulaire: PYROALLIANCE, 78130 Les Mureaux (FR)
(72) Inventeur: HAGUENAUER, Bertrand, 78130 Les Mureaux (FR); PEREZ, Sebastien, 78130 Les Mureaux (FR); LAMONTAGNE, Christophe, 78130 Les Mureaux (FR); GIBAUD, Eric, 78130 Les Mureaux (FR)
(74) Mandataire: Cabinet Beau de Loménie
(86) Numéro de dépôt international: PCT/FR2022/051395
(87) Numéro de publication internationale: WO 2023/285761

(56) Documents cités:
- FR-A1- 2 661 466
- FR-A1- 2 713 326
- FR-A1- 2 736 615
- FR-A1- 2 807 123
- RU-C1- 2 684 969
- US-A1- 2020 346 788

## Description

### Domaine Technique

L'invention se rapporte au domaine technique des dispositifs de liaison et de séparation d'objets par rapport à une structure. Il s'agit plus spécifiquement de dispositifs de séparation de satellite ou de microsatellite à partir d'une fusée, qui ont pour objet de séparer le satellite ou le microsatellite de son support et de l'en écarter rapidement.

### Technique antérieure

Pour des raisons de fiabilité, les dispositifs de séparation de deux ensembles peuvent mettre en jeu le coulissement d'une bague de libération le long d'un écrou fendu. Un tel dispositif est par exemple décrit dans le document US5671650A. Dans ce document, le coulissement de la bague de libération et la libération de l'écrou fendu permettent de faire coulisser un axe. Dans le but de réduire le choc à l'impact de cet axe en fin de course, un amortisseur solide est fixé à l'une des extrémités du dispositif. Toutefois, l'amortisseur présente une base et un plot central de taille importante et augmente significativement l'encombrement du dispositif. En outre, un tel dispositif n'est pas réutilisable.

L'utilisation de dispositifs de déverrouillage réutilisable est plus intéressante, notamment pour des raisons financières et de fiabilité. En effet, le dispositif de déverrouillage réutilisable permet de réaliser au moins un essai avec des gaz non pyrotechniques, dits « froids », pour tester les performances dudit dispositif. Le brevet US4187759 décrit notamment un dispositif de déverrouillage s'appuyant sur l'effet conjugué d'une part d'un déplacement d'une bague de libération pour libérer un écrou fendu qui enserre la vis de liaison et d'autre part de la poussé d'un éjecteur pour expulser la vis de liaison. Un ressort est placé dans le dispositif pour permettre à la bague de libération de retrouver sa position initiale et donc permettre à l'écrou fendu d'être réutilisé. Toutefois, malgré la présence du ressort, le déplacement rapide de la bague de libération entraîne des chocs.

Pour limiter les chocs liés au déplacement de la bague de libération, les documents US20200346788A1 et US20200189771A1 décrivent un dispositif d'amortissement comprenant des goupilles d'amortissement et une plaque d'amortissement. Les goupilles d'amortissement sont agencées pour amortir mécaniquement la bague de libération dès que le dispositif de séparation est déverrouillé, c'est-à-dire dès la libération des segments de l'écrou. Toutefois, un amortissement de la bague de libération dès le point de déverrouillage réduit la fiabilité du système. En effet, en cas de défaillance du dispositif, le point de déverrouillage ne pourra pas être dépassé, rendant la séparation des deux ensembles délicate voire impossible. En outre, l'ajout de ce dispositif d'amortissement diminue le caractère réutilisable du dispositif. En effet, les goupilles d'amortissement frappent et déforment plastiquement la plaque d'amortissement, c'est-à-dire la déforment de manière irréversible.

### Exposé de l'invention

La présente invention a pour but de proposer une solution d'amortissement qui permet d'amortir les chocs liés à la course de la bague de libération dans les dispositifs de séparation d'objets par rapport à une structure, en remédiant aux inconvénients précités.

A cet effet, l'invention propose un dispositif de séparation comprenant une bague de libération apte à coulisser le long d'un écrou segmenté entre une chambre d'expansion des gaz et un obturateur annulaire selon une direction axiale, la bague de libération étant configurée pour se déplacer selon la direction axiale entre une première position de verrouillage dans laquelle les segments de l'écrou sont maintenus autour d'une vis de fixation par ladite bague et une deuxième position dans laquelle les segments de l'écrou sont libérés par ladite bague, ledit dispositif étant caractérisé en ce que la bague de libération est en outre configurée pour se déplacer sur une distance déterminée non nulle selon la direction axiale entre la deuxième position et une troisième position dans laquelle ladite bague est en contact avec un élément d'amortissement présent entre ladite bague et l'obturateur annulaire, la bague de libération n'étant pas en contact avec l'élément d'amortissement entre la deuxième position et la troisième position, et en ce que la bague de libération est configurée pour compresser l'élément d'amortissement sur une distance déterminée non nulle selon la direction axiale entre la troisième position et une quatrième position dans laquelle ladite bague est en butée.

Ainsi, l'élément d'amortissement de la bague de libération n'intervient qu'après la libération des segments de l'écrou, augmentant la fiabilité générale du dispositif. En outre, l'élément d'amortissement peut facilement être ajouté aux dispositifs de séparation préexistants, sans modification de la configuration.

Selon une caractéristique particulière de l'invention, la distance parcourue par la bague de libération entre la troisième position et la quatrième position représente entre 30% et 50% de la distance parcourue par la bague de libération entre la première position et la quatrième position.

Selon une autre caractéristique particulière de l'invention, une partie de l'élément d'amortissement est apte à s'écouler dans la direction axiale entre la bague de libération et l'obturateur annulaire lorsque la bague de libération est entre la troisième et la quatrième position.

Selon une autre caractéristique particulière de l'invention, l'écart entre le rayon extérieur de la bague de libération et le rayon intérieur de l'obturateur annulaire par lequel une partie de l'élément d'amortissement est apte à s'écouler dans la direction axiale est compris entre 0,5 mm et 1 mm.

Selon une autre caractéristique particulière de l'invention, l'élément d'amortissement est disposé dans une gorge de l'obturateur annulaire, le volume de l'élément d'amortissement occupant entre 50% et 70% du volume intérieur de la gorge.

Selon une autre caractéristique particulière de l'invention, la bague de libération est au contact d'une protubérance présente à la surface de l'obturateur annulaire lorsque ladite bague est en quatrième position.

Selon une autre caractéristique particulière de l'invention, l'élément d'amortissement est réalisé dans un matériau élastomère ou dans un plastique déformable.

Selon une autre caractéristique particulière de l'invention, l'élément d'amortissement est réalisé dans un silicone présentant une dureté Shore A comprise entre 50 et 90.

L'invention concerne en outre un procédé de séparation d'un sous-ensemble lié à un dispositif de séparation selon l'invention par la vis de fixation, ledit procédé comprenant au moins :
- la libération de gaz dans la chambre d'expansion des gaz,
- le coulissement sous l'action des gaz de la bague de libération entre la première position et la deuxième position de façon à libérer les segments de l'écrou,
- l'éjection de la vis de fixation libérée de l'écrou, et
- l'amortissement de la bague de libération par l'élément d'amortissement entre la troisième et la quatrième position.

### Brève description des dessins

[Fig. 1] La figure 1 est une vue en coupe transversale d'un dispositif de séparation selon l'invention lorsque la bague de libération est en première position.
[Fig. 2] La figure 2 est une vue en coupe partielle du dispositif de séparation de la figure 1 lorsque la bague de libération est en première position.
[Fig. 3] La figure 3 est une vue en coupe partielle du dispositif de séparation de la figure 1 lorsque la bague de libération est en deuxième position.
[Fig. 4] La figure 4 est une vue en coupe partielle du dispositif de séparation de la figure 1 lorsque la bague de libération est en troisième position.
[Fig. 5] La figure 5 est une vue en coupe transversale du dispositif de séparation de la figure 1 lorsque la bague de libération est en quatrième position.
[Fig. 6] La figure 6 est une vue en coupe partielle du dispositif de séparation de la figure 1 lorsque la bague de libération est en quatrième position.

### Description des modes de réalisation

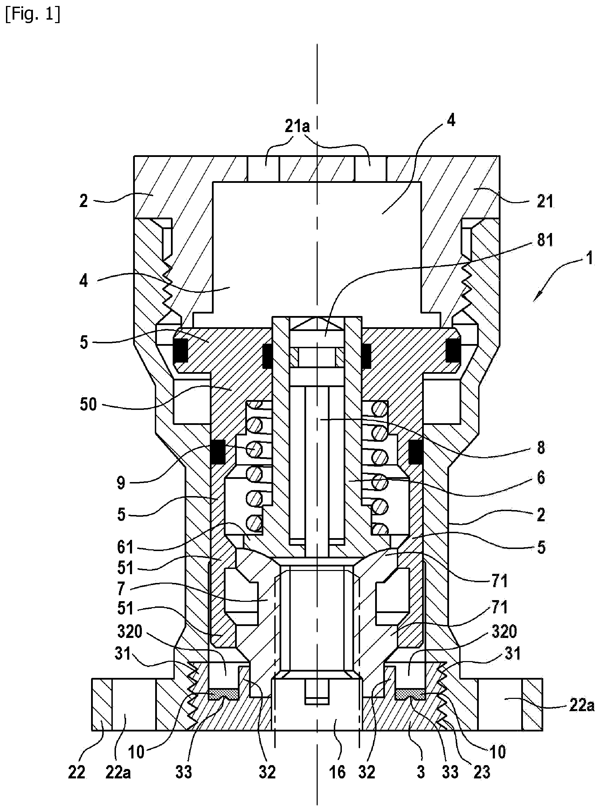

Les figures 1 à 6 illustrent un dispositif de séparation 1 selon l'invention. Il s'agit ici d'un mode de réalisation préféré de l'invention. On ne sort bien entendu pas du cadre de l'invention si des éléments ou les fonctionnements de certains éléments du dispositif de séparation décrit ci-après sont modifiés, tant que l'amortissement de la bague de libération fonctionne de manière similaire à la description ci-après. On ne sort pas non plus du cadre de l'invention si des éléments sont ajoutés au dispositif de séparation ou supprimés du dispositif de séparation décrit ci-après, pourvu que le fonctionnement de l'élément d'amortissement décrit ci-après ne soit pas modifié.

Lorsque le dispositif de séparation 1 est en position verrouillée, ledit dispositif de séparation 1 est relié à un sous-ensemble par le biais d'une vis de liaison 16. Le dispositif de séparation 1 permet la séparation du sous-ensemble par l'éjection de la vis de liaison 16.

Le dispositif de séparation 1 illustré sur les figures 1 à 6 comprend un corps creux 2, qui est une pièce relativement cylindrique possédant une extrémité amont et une extrémité avale. L'extrémité amont possède un évasement amont 21 comportant deux alésages cylindriques 21a permettant la connexion avec un dispositif d'arrivée et de sortie de gaz. Ces deux alésages cylindriques débouchent sur une chambre d'expansion des gaz 4 située à l'intérieur du corps 2.

L'extrémité avale du corps 2 présente une embase élargie 22 comportant sur une couronne périphérique deux alésage 22a diamétralement opposés destinés à recevoir chacun une vis de façon à solidariser ledit dispositif de séparation 1 au sous-ensemble. L'extrémité avale du corps 2 possède également un évasement aval 23 prenant la forme d'une partie cylindrique creuse filetée de diamètre interne supérieur à celui de la partie centrale du corps 2. L'évasement 23 présent à l'extrémité avale du corps 2 est destiné à recevoir un obturateur annulaire 3, qui est vissé dans ledit évasement aval 23.

L'obturateur annulaire 3 se présente sous la forme d'un disque plat prolongé par une collerette périphérique 31 filetée sur sa surface latérale externe, qui sera destinée à assurer le vissage dans l'évasement aval 23 du corps creux 2. La collerette périphérique 31 de l'obturateur 3 peut comporter des alésages radiaux situés dans le prolongement d'alésages radiaux présents sur l'évasement aval 23 du corps 2, permettant le passage de goupilles pour améliorer la fixation de l'obturateur 3 au corps 2. L'obturateur 3 comporte en outre un alésage central prolongé par une collerette intérieure 32 permettant le passage de la vis de liaison 16. La hauteur de la collerette intérieure 32 est inférieure à la hauteur de la collerette extérieure 31. La collerette intérieure 32 définit avec la collerette périphérique 31 une gorge 320. La profondeur de la gorge 320 correspond à la hauteur de la collerette intérieure 32.

Selon un mode de réalisation particulier de l'invention, l'obturateur 3 peut comporter une protubérance circulaire 33 de faible hauteur située dans la gorge 320, entre la collerette intérieure 32 et la collerette périphérique 31.

Un élément d'amortissement 10 se présentant sous la forme d'un anneau est disposé dans la gorge 320 de l'obturateur 3, entre la collerette périphérique 31 et la collerette intérieure 32. De préférence, l'élément d'amortissement 10 est placé au contact de la collerette périphérique 31 et espacé de la collerette intérieure 32. L'élément d'amortissement 10 peut être placé sur la protubérance circulaire 33. Selon un mode particulier de réalisation de l'invention, le volume occupé par l'élément d'amortissement 10 correspond à entre 50% et 70% du volume de la gorge 320 de l'obturateur 3.

L'élément d'amortissement 10 peut être réalisé dans un matériau élastomère. Par exemple, l'élément d'amortissement 10 peut être réalisé en silicone. L'élément d'amortissement 10 peut présenter une dureté Shore A comprise entre 50 et 90. L'élément d'amortissement 10 peut également être réalisé dans un plastique déformable ou un polymère, par exemple en plyétheréthercétone (appelé « PEEK »). L'élément d'amortissement peut également présenter une structure en nid d'abeille.

Le dispositif de séparation 1 comprend en outre une bague de libération 5. La bague de libération 5 est une pièce cylindrique creuse possédant deux extrémités libres dont l'une présente une embase élargie 50 ayant une face externe circulaire plane munie d'un alésage central. La bague 5 est traversée par un canal central de section variable, présentant globalement une partie amont de diamètre interne réduit et traversant l'embase élargie 50, et une partie aval de diamètre interne supérieur possédant sur sa paroi latérale interne deux protubérances annulaires 51, semblables à deux anneaux parallèles entre eux, chaque protubérance 51 ayant une section sensiblement trapézoïdale dont le sommet est plan, permettant ainsi de définir une face supérieure annulaire plane. L'une des deux protubérances 51 est située à l'extrémité libre de la partie aval du canal central de la bague 5. La bague de libération 5 enserre un écrou segmenté 7 et une pièce cylindrique creuse appelée séparateur 6, ces deux pièces 7 et 6 étant au contact et en continuité l'une de l'autre.

L'écrou segmenté 7, qui a une forme sensiblement cylindrique, est découpé en quatre segments identiques suivant quatre plans radiaux, perpendiculaires entre eux, et, lorsque les quatre segments se touchent, ledit écrou 7 présente un canal central fileté dans lequel est vissée la vis de liaison 16 reliant le dispositif 1 au sous-ensemble. La surface latérale externe dudit écrou 7 possède deux protubérances annulaires 71, semblables à deux anneaux parallèles entre eux, chaque protubérance 71 ayant une section sensiblement trapézoïdale dont le sommet est plan, permettant ainsi de définir une face supérieure annulaire plane. L'une des deux extrémités de l'écrou 7 se termine par l'une des deux protubérances 71 et présente un relief légèrement convexe. Les deux protubérances 71 de l'écrou 7 ont un écartement identique à celui que font les deux protubérances annulaires 51 situées sur la paroi interne de la bague 5.

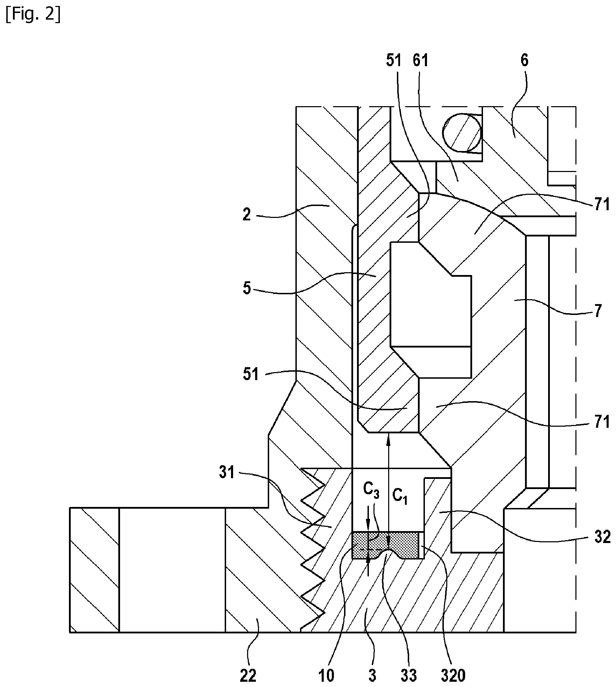

Lorsque la bague de libération 5 du dispositif de séparation 1 est dans une première position, comme illustré sur les figures 1 et 2, l'écrou segmenté 7 est enserré dans la bague 5 de façon à ce que ses protubérances annulaires 71 soient au contact de celles 51 de ladite bague 5 au niveau de leur face supérieure plane respective. Ainsi positionné, l'écrou 7 se présente sous forme compactée avec des segments qui se touchent.

Le séparateur 6 est constitué par un corps cylindrique creux possédant à l'une de ses extrémités une tête élargie légèrement concave présentant un alésage central, l'autre extrémité débouchant dans la chambre d'expansion 4. Le séparateur 6 est situé dans la partie amont du canal central de la bague 5 et émerge de la face externe circulaire plane de l'embase élargie de ladite bague 5. Le séparateur 6 a le même axe de révolution que l'écrou 7 et est au contact dudit écrou 7 par l'intermédiaire de sa tête élargie 61, qui vient en butée contre l'extrémité légèrement convexe de l'écrou 7.

Un éjecteur 8 coulisse dans le corps cylindrique creux du séparateur 6. L'éjecteur 8 est une pièce sensiblement de même longueur que le séparateur 6 constituée par un corps cylindrique dont une extrémité se termine par une tête élargie 81 légèrement conique ayant un diamètre sensiblement égal au diamètre interne du séparateur 6.

Lorsque la bague de libération 5 du dispositif de séparation 1 est en première position, comme illustré sur la figure 1, l'éjecteur 8 est logé dans le séparateur 6 de manière à ce que son corps cylindrique traverse la tête élargie 61 dudit séparateur 6 pour venir en appui contre la vis de liaison 16 et de manière à ce que la tête élargie 81 dudit éjecteur 8 affleure l'extrémité du séparateur 6 émergeant dans la chambre d'expansion 4.

Un ressort 9 est localisé dans l'espace compris entre le séparateur 6 et la bague de libération 5, venant en appui à la fois contre la tête élargie 61 du séparateur 6 et la face interne de l'embase élargie 50 de la bague 5.

Les figures 1 et 2 illustrent la configuration du dispositif de séparation 1 lorsque la bague de libération 5 est en première position. La première position de la bague de libération 5 correspond à une configuration verrouillée stable du dispositif de séparation 1, dans laquelle ledit dispositif est dans une position de repos initiale.

Lorsque la séparation du sous-ensemble est souhaitée, le mode de fonctionnement s'effectue comme suit. Lorsque l'ordre de séparation est envoyé, par exemple sous la forme d'une impulsion électrique amorçant un générateur de gaz, des gaz envahissent la chambre d'expansion 4 en pénétrant par les alésages cylindriques 21a présents sur l'évasement amont 21 du corps 2. Ainsi, les gaz présents dans la chambre 4 viennent exercer une pression simultanément sur l'embase 50 de la bague de libération 5, sur la tête élargie 81 de l'éjecteur 8 ainsi que sur l'extrémité du séparateur 6 émergeant dans la chambre d'expansion 4.

Lorsque la pression dans la chambre d'expansion atteint une valeur seuil, la bague de libération 5 commence à coulisser vers l'obturateur 3, faisant ainsi coulisser les protubérances 51 de la bague 5 contre les protubérances 71 de l'écrou 7.

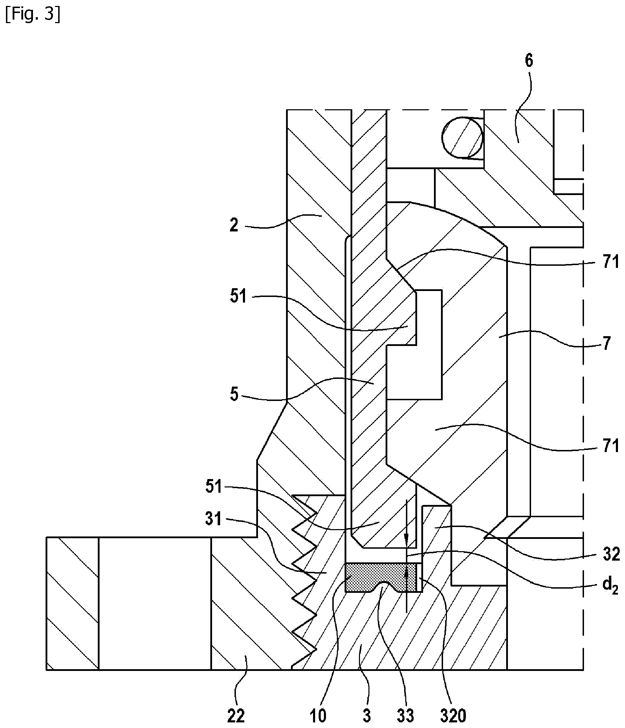

Lorsque les protubérances 51 de la bague 5 dépassent les protubérances 71 de l'écrou 7, les protubérances 71 de l'écrou segmenté 7 selon libérées de la bague 5, comme illustré sur la figure 3. Les segments de l'écrou 7 vont alors avoir tendance à s'ouvrir « en pétales » et à venir en contact des surfaces de plus grand diamètre du canal interne de la bague de libération 5. L'ouverture des segments est aidée par l'action du séparateur 6 qui exerce une pression sur l'écrou 7 par l'intermédiaire de sa tête élargie 61. La position de la bague de libération 5 juste après la libération des segments de l'écrou 7 définit une deuxième position de la bague de libération 5, illustrée sur la figure 3. Dans cette deuxième position, la distance d₂ entre la bague de libération 5 et l'élément d'amortissement 10 est non nulle.

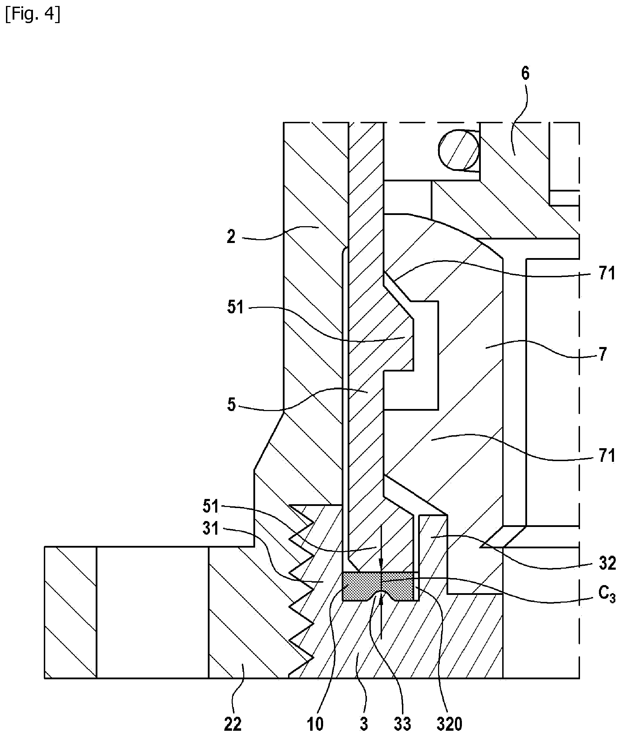

L'ouverture des segments de l'écrou 7 entraîne la désolidarisation dudit écrou 7 de la vis de liaison 16. La vis de liaison 16, subissant la poussée de l'éjecteur 8, est expulsée, entraînant ainsi la séparation du dispositif de séparation 1 d'avec le sous-ensemble. La bague de libération 5 poursuit sa course librement, avant d'entrer en contact avec l'élément d'amortissement 10. La position de la bague de libération 5 au moment de son entrée en contact avec l'élément d'amortissement 10 définit une troisième position de ladite bague de libération 5, illustrée par la figure 4.

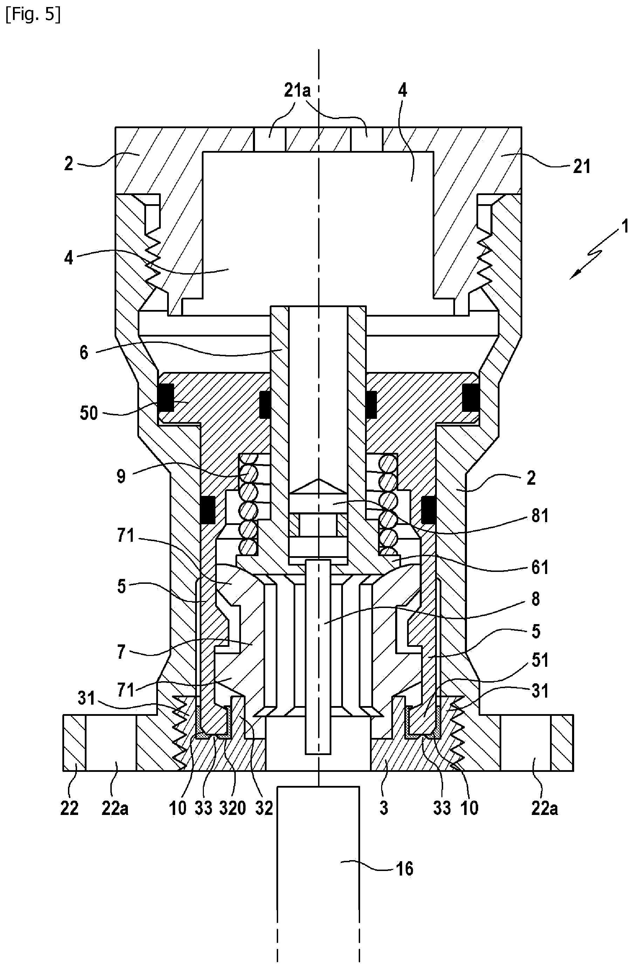

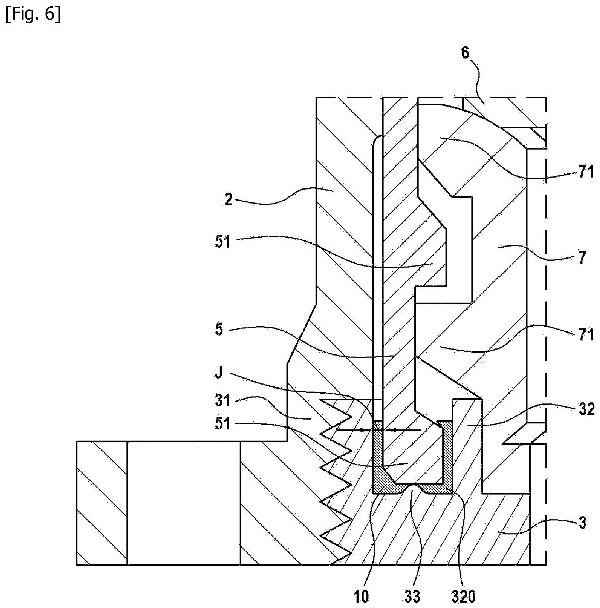

La bague de libération 5 est ensuite amortie par ledit élément d'amortissement 10, évitant ainsi un choc trop important avec l'obturateur 3. La bague de libération 5 peut être arrêtée par la protubérance circulaire 33 de l'obturateur 3. La position de la bague de libération 5 lorsqu'elle en arrive en butée contre l'obturateur 3 ou à l'intérieur de l'élément d'amortissement 10 définit une quatrième position de ladite bague de libération 5, illustrée sur les figures 5 et 6. En particulier, la figure 5 illustre la configuration du dispositif de séparation 1 en position déverrouillée, c'est-à-dire lorsque la bague de libération 5 a terminé sa course et que le sous-ensemble a été séparé du dispositif 1.

Afin d'augmenter les chances de succès de déverrouillage en cas de défaillance, il est préférable que la bague de libération 5 entre en contact avec l'élément d'amortissement 10 après que les segments de l'écrou 7 aient été libérés. En effet, la distance non nulle parcourue par la bague de libération 5 entre la deuxième position, dans laquelle les segments de l'écrou 7 viennent d'être libérés, et la troisième position, dans laquelle la bague de libération 5 entre en contact avec l'élément d'amortissement 10, est une course libre et sans amortissement.

Selon un mode particulier de réalisation de l'invention visible sur les figures 1 à 6, la distance de course amortie c₃ parcourue par la bague de libération 5 après son contact avec l'élément d'amortissement 10, c'est-à-dire la distance parcourue par la bague de libération 5 entre la troisième et la quatrième position, doit correspondre à entre 30% et 50% de la distance de course totale c₁ parcourue par la bague de libération 5, c'est-à-dire entre 30% et 50% de la distance parcourue par la bague de libération 5 entre la première et la quatrième position. Ces proportions permettent un amortissement très satisfaisant de la bague de libération 5 tout en garantissant une grande sécurité du système.

Afin d'améliorer l'amortissement de la bague de libération 5, une partie de l'élément d'amortissement 10 peut s'écouler et remonter le long de la bague de libération, dans la direction de la course de la bague 5. Ainsi, comme illustré sur les figures 5 et 6, une partie de l'élément d'amortissement 10 est présent dans le jeu J entre les parois extérieures de la bague de libération 5 et les parois intérieures de la collerette extérieure 31 de l'obturateur 3. Le jeu J correspond à l'écart entre le rayon extérieur de la bague de libération 5 et le rayon intérieur de la collerette extérieure 31 de l'obturateur 3. Selon un mode de réalisation particulier de l'invention, le jeu J peut être compris entre 0,5 mm et 1 mm.

Lorsque le dispositif de séparation 1 est testé en utilisant des gaz non pyrotechniques, dits « gaz froids », la force de rappel du ressort 9 se déclenche lorsque la pression des gaz se dissipe. En se détendant, le ressort 9 force la bague de libération 5 à revenir à sa position initiale et ramène l'ensemble de l'écrou de séparation 7 à son état initial. Ainsi, le ressort 9 permet de faire coulisser la bague de libération 5 entre la quatrième position et la première position. L'élément d'amortissement 10 revient également à un état proche de son état initial, voire identique à son état initial. L'ajout d'une nouvelle vis de liaison ramène l'éjecteur 8 à sa position initiale de sorte que le dispositif de séparation 1 est à nouveau prêt à l'emploi. Le dispositif de séparation 1 est par conséquent réutilisable.

## Revendications

1. Dispositif de séparation (1) comprenant une bague de libération (5) apte à coulisser le long d'un écrou segmenté (7) entre une chambre d'expansion des gaz (4) et un obturateur annulaire (3) selon une direction axiale, la bague de libération étant configurée pour se déplacer selon la direction axiale entre une première position de verrouillage dans laquelle les segments de l'écrou (7) sont maintenus autour d'une vis de fixation (16) par ladite bague (5) et une deuxième position dans laquelle les segments de l'écrou (7) sont libérés par ladite bague (5), ledit dispositif (1) étant **caractérisé en ce que** la bague de libération (5) est en outre configurée pour se déplacer sur une distance déterminée (d₂) non nulle selon la direction axiale entre la deuxième position et une troisième position dans laquelle ladite bague (5) est en contact avec un élément d'amortissement (10) présent entre ladite bague (5) et l'obturateur annulaire (3), la bague de libération (5) n'étant pas en contact avec l'élément d'amortissement (10) entre la deuxième position et la troisième position,
et **en ce que** la bague de libération (5) est configurée pour compresser l'élément d'amortissement (10) sur une distance déterminée non nulle (c₃) selon la direction axiale entre la troisième position et une quatrième position dans laquelle ladite bague (5) est en butée.

2. Dispositif de séparation (1) selon la revendication 1, dans lequel la distance (c₃) parcourue par la bague de libération (5) entre la troisième position et la quatrième position représente entre 30% et 50% de la distance parcourue (c₁) par la bague de libération (5) entre la première position et la quatrième position.

3. Dispositif de séparation (1) selon la revendication 1 ou 2, dans lequel une partie de l'élément d'amortissement (10) est apte à s'écouler dans la direction axiale entre la bague de libération (5) et l'obturateur annulaire (3) lorsque la bague de libération (5) est entre la troisième et la quatrième position.

4. Dispositif de séparation (1) selon la revendication 3, dans lequel l'écart (J) entre le rayon extérieur de la bague de libération (5) et le rayon intérieur de l'obturateur annulaire (3) par lequel une partie de l'élément d'amortissement (10) est apte à s'écouler dans la direction axiale est compris entre 0,5 mm et 1 mm.

5. Dispositif de séparation (1) selon l'une quelconque des revendications 1 à 4, dans lequel l'élément d'amortissement (10) est disposé dans une gorge (320) de l'obturateur annulaire, le volume de l'élément d'amortissement (10) occupant entre 50% et 70% du volume intérieur de la gorge (320).

6. Dispositif de séparation (1) selon l'une quelconque des revendications 1 à 5, dans lequel la bague de libération (5) est au contact d'une protubérance (33) présente à la surface de l'obturateur annulaire (3) lorsque ladite bague (5) est en quatrième position.

7. Dispositif de séparation (1) selon l'une quelconque des revendications 1 à 6, dans lequel l'élément d'amortissement (10) est réalisé dans un matériau élastomère ou dans un plastique déformable.

8. Dispositif de séparation (1) selon l'une quelconque des revendications 1 à 7, dans lequel l'élément d'amortissement (10) est réalisé dans un silicone présentant une dureté Shore A comprise entre 50 et 90.

9. Procédé de séparation d'un sous-ensemble lié à un dispositif de séparation (1) selon l'une quelconque des revendications 1 à 8 par la vis de fixation (16), ledit procédé comprenant au moins :
- la libération de gaz dans la chambre d'expansion des gaz (4),
- le coulissement sous l'action des gaz de la bague de libération (5) entre la première position et la deuxième position de façon à libérer les segments de l'écrou (7),
- l'éjection de la vis de fixation (16) libérée de l'écrou (7), et
- l'amortissement de la bague de libération (5) par l'élément d'amortissement (10) entre la troisième et la quatrième position.

## Patentansprüche

1. Trennvorrichtung (1), umfassend einen Freigabering (5), der ausgelegt ist, um entlang einer segmentierten Schraubenmutter (7) zwischen einer Erweiterungskammer der Gase (4) und einer ringförmigen Begrenzung (3) entlang einer axialen Richtung zu gleiten, wobei der Freigabering konfiguriert ist, um sich entlang der axialen Richtung zwischen einer ersten Verriegelungsposition, in der die Segmente der Schraubenmutter (7) um eine Befestigungsschraube (16) durch den Ring (5) gehalten werden, und einer zweiten Position zu bewegen, in der die Segmente der Schraubenmutter (7) durch den Ring (5) freigegeben werden, wobei die Vorrichtung (1) **dadurch gekennzeichnet ist, dass** der Freigabering (5) außerdem konfiguriert ist, um sich über eine festgelegte Distanz (d₂) von nicht Null entlang der axialen Richtung zwischen der zweiten Position und einer dritten Position zu bewegen, wobei der Ring (5) mit einem Dämpfungselement (10) in Kontakt ist, das zwischen dem Ring (5) und der ringförmigen Begrenzung (3) vorhanden ist, wobei der Freigabering (5) nicht in Kontakt mit dem Dämpfungselement (10) zwischen der zweiten Position und der dritten Position ist,
und dadurch, dass der Freigabering (5) konfiguriert ist, um das Dämpfungselement (10) auf einer festgelegten Distanz von nicht Null (c₃) entlang der axialen Richtung zwischen der dritten Position und einer vierten Position zu komprimieren, in der der Ring (5) im Anschlag ist.

2. Trennvorrichtung (1) nach Anspruch 1, wobei die vom Freigabering (5) zurückgelegte Distanz (c₃) zwischen der dritten Position und der vierten Position zwischen 30 % und 50 % der vom Freigabering (5) zwischen der ersten Position und der vierten Position zurückgelegten Distanz (c₁) darstellt.

3. Trennvorrichtung (1) nach Anspruch 1 oder 2, wobei ein Teil des Dämpfungselements (10) ausgelegt ist, um in der axialen Richtung zwischen dem Freigabering (5) und der ringförmigen Begrenzung (3) zu verlaufen, wenn sich der Freigabering (5) zwischen der dritten und der vierten Position befindet.

4. Trennvorrichtung (1) nach Anspruch 3, wobei der Abstand (J) zwischen dem Außenradius des Freigaberings (5) und dem Innenradius der ringförmigen Begrenzung (3), durch den ein Teil des Dämpfungselements (10) in der axialen Richtung verlaufen kann, im Bereich zwischen 0,5 und 1 mm liegt.

5. Trennvorrichtung (1) nach einem der Ansprüche 1 bis 4, wobei das Dämpfungselement (10) in einer Aussparung (320) der ringförmigen Begrenzung angeordnet ist, wobei das Volumen des Dämpfungselements (10) zwischen 50 % und 70 % des Innenvolumens der Aussparung (320) einnimmt.

6. Trennvorrichtung (1) nach einem der Ansprüche 1 bis 5, wobei der Freigabering (5) in Kontakt mit einem Vorsprung (33) ist, der auf der Oberfläche der ringförmigen Begrenzung (3) vorhanden ist, wenn sich der Ring (5) in der vierten Position befindet.

7. Trennvorrichtung (1) nach einem der Ansprüche 1 bis 6, wobei das Dämpfungselement (10) aus einem elastomeren Material oder aus einem verformbaren Kunststoff hergestellt ist.

8. Trennvorrichtung (1) nach einem der Ansprüche 1 bis 7, wobei das Dämpfungselement (10) aus einem Silikon hergestellt ist, das eine Shore A-Härte zwischen 50 und 90 darstellt.

9. Trennverfahren einer Untereinheit, die mit einer Trennvorrichtung (1) nach einem der Ansprüche 1 bis 8 durch die Befestigungsschraube (16) verbunden ist, wobei das Verfahren mindestens Folgendes umfasst:
- die Freisetzung von Gas in der Erweiterungskammer der Gase (4),
- das Gleiten unter der Einwirkung der Gase des Freigaberings (5) zwischen der ersten Position und der zweiten Position, um die Segmente der Schraubenmutter (7) freizugeben.
- das Ausstoßen der Befestigungsschraube (16), die von der Schraubenmutter (7) freigegeben wurde, und
- das Dämpfen des Freigaberings (5) durch das Dämpfungselement (10) zwischen der dritten und der vierten Position.

## Claims

1. A separating device (1) comprising a release ring (5) able to slide along a segmented nut (7) between a gas expansion chamber (4) and an annular shutter (3) along an axial direction, the release ring being configured to move along the axial direction between a first locking position wherein the segments of the nut (7) are retained around a fastening screw (16) by said ring (5) and a second position wherein the segments of the nut (7) are released by said ring (5), said device (1) being **characterized in that** the release ring (5) is moreover configured to travel a determined non-zero distance (d2) along the axial direction between the second position and a third position wherein said ring (5) is in contact with a damping element (10) located between said ring (5) and the annular shutter (3), the release ring (5) not being in contact with the damping element (10) between the second position and the third position,
and **in that** the release ring (5) is configured to compress the damping element (10) over a determined non-zero distance (c3) along the axial direction between the third position and a fourth position wherein said ring (5) is at its stop position.

2. The separating device (1) as claimed in claim 1, wherein the distance (c3) travelled by the release ring (5) between the third position and the fourth position accounts for between 30% and 50% of the distance (c1) travelled by the release ring (5) between the first position and the fourth position.

3. The separating device (1) as claimed in claim 1 or 2, wherein a part of the damping element (10) is able to go past in the axial direction between the release ring (5) and the annular shutter (3) when the release ring (5) is between the third and the fourth position.

4. The separating device (1) as claimed in claim 3, wherein the separation (J) between the outer radius of the release ring (5) and the inner radius of the annular shutter (3) via which a part of the damping element (10) is able to go past in the axial direction is between 0.5 mm and 1 mm.

5. The separating device (1) as claimed in any of claims 1 to 4,
wherein the damping element (10) is disposed in a groove (320) of the annular shutter, the volume of the damping element (10) occupying between 50% and 70% of the inner volume of the groove (320).

6. The separating device (1) as claimed in any of claims 1 to 5, wherein the release ring (5) is in contact with a protrusion (33) present on the surface of the annular shutter (3) when said ring (5) is in the fourth position.

7. The separating device (1) as claimed in any of claims 1 to 6, wherein the damping element (10) is made of an elastomer material or of a deformable plastic.

8. The separating device (1) as claimed in any of claims 1 to 7, wherein the damping element (10) is made of a silicone having a Shore A hardness between 50 and 90.

9. A method for separating a sub-assembly connected to a separating device (1) as claimed in any of claims 1 to 8 by the fastening screw (16), said method comprising at least:
- the release of gas in the gas expansion chamber (4),
- the sliding, under the action of the gas, of the release ring (5) between the first position and the second position in such a way as to release the segments of the nut (7),
- the ejection of the fastening screw (16) released from the nut (7), and
- the damping of the release ring (5) by the damping element (10) between the third and the fourth position.
